# EUROPÄISCHE PATENTANMELDUNG

(11) **EP 0 810 391 A2**
(43) Veröffentlichungstag der Anmeldung: **03.12.1997**
(21) Anmeldenummer: 97106677.4
(22) Anmeldetag: 23.04.1997
(51) Int. Cl.: F16H 57/02

(54) **Entlüftungsdeckel eines Schaltgetriebes für Nebenaggregate für Kraftfahrzeugmotoren**

(30) Priorität: 30.05.1996 DE 19621641
(71) Anmelder: FICHTEL & SACHS AG, D-97424 Schweinfurt (DE)
(72) Erfinder: Baier, Wolfgang, Ing., 97502 Obbach (DE); Deppert, Reinhard, Dipl.-Ing. (FH), 97469 Gochsheim (DE); Kurz, Walter Dr., 87471 Durach (DE)

(57) **Zusammenfassung**

Die Erfindung bezieht sich auf einen Entlüftungsdeckel (2) zur Abdichtung eines drehbaren Getriebegehäuses (1) eines Schaltgetriebes von Nebenaggregaten für Kraftfahrzeuge, bestehend aus einem Labyrinthträger (3) und einem Deckel (4) welcher am Umfang gleichmäßig verteilt Luftausgleichsbohrungen (13 - 16) aufweist, die über Labyrinthgänge (18-21) mit einer zentral im Labyrinthträger (3) angeordneten Entlüftungsbohrung (17) in Verbindung stehen. Ein Schmiermittel (5) im Inneren des Getriebegehäuses (1) kann bei stillstehendem Aggregat mit einem Pegel (10), welcher in bestimmten Schrägstandswinkels (11) über die Entlüftungsbohrung (17) hinausreicht, nicht mit der Außenatmosphäre in Berührung kommen, da jeder der Labyrinthgänge (18-21) durch seine spiralförmige Anordnung über den höchstmöglichen Pegel (10) des Schmiermittels (5) hinausragt, wodurch zumindest eine der vier Luftausgleichsbohrungen (13-16) mit einem freien Labyrinthgang mit der Entlüftungsbohrung (17) in Berührung steht und die Entlüftung sicherstellt.

## Beschreibung

Die Erfindung betrifft einen Entlüftungsdeckel für ein umlaufendes Getriebegehäuse eines Schaltgetriebes für Nebenaggregate an Antriebsmotoren für Kraftfahrzeuge gemäß dem Oberbegriff des Anspruchs 1.

Jeder mit einem Verbrennungsmotor für Kraftfahrzeuge verbundene Arbeitsraum, der für sich mit einem Schmiermittel gefüllt ist, weist eine Entlüftung auch dann auf, wenn keine Dichtelemente mit dem Schmiermittel in Berührung stehen. Die Begründung hierfür liegt in den Temperaturunterschieden von bis zu 100° C, die in dem verbleibenden Luftraum der Gehäuseteile Überdruck oder Unterdruck erzeugen, je nach dem, ob das System erwärmt oder abgekühlt wird. Bei Schaltgetrieben für Nebenaggregate trifft dieser Umstand in besonderem Maße zu, was jedoch wegen des frühen Entwicklungstadiums der Schaltgetriebe noch keiner Erwähnung wert war, wie die DE 41 18 853 A1 beweist. Auch aus dem deutschen Gebrauchsmuster G 92 11 473 läßt sich keine Entlüftung des abgeschlossenen Getriebegehäuses für eine Antriebsvorrichtung für den Kühlerlüfter bei Kraftfahrzeugen herauslesen. Offensichtlich wird bei diesen Konstruktionen davon ausgegangen, daß sich das Schmiermittel im Betrieb der Antriebsvorrichtung im wesentlichen in äußeren ringförmigen Raum befindet, da es durch die Fliehkraft des drehenden Getriebegehäuses nach außen befördert wird und nicht mit Dichtelementen, die den Innenraum von der Atmosphäre abdichten, in Berührung kommt. Auch wurde irrtümlicherweise angenommen, daß im Stillstand, wenn sich das Schmiermittel der Schwerkraft folgend nach unten bewegt und dort sammelt, die Abkühlung stattfindet und allenfalls ein Unterdruck im Inneren des Getriebegehäuses auftritt, der nicht das Bestreben hat, Öl von innen nach außen über die Dichtelemente zu befördern.
Mehrere Gründe sind es, die eine Entlüftung notwendig machen: Nach Abstellen des Antriebsmotors kommt Flutwärme in die hinter dem Kühlerlüfter plazierten Getriebegehäuse mit dem Ergebnis, daß im Inneren des Getriebegehäuses Überdruck entsteht. Außerdem kann durch vorübergehendes Abstellen des Fahrzeuges auf steilabschüssigem Gelände der Flüssigkeitspegel des Schmiermittels an die Dichtelemente heranreichen. Schließlich sind die Innenräume der Getriebegehäuse für die Antriebsvorrichtungen klein bemessen, weshalb im Stillstand der Pegel des Schmiermittels an sich schon einen hohen Stand einnimmt. Es wird daher in der vorliegenden Erfindung vorgeschlagen, eine Entlüftung anzubringen, die in jedem Falle eine 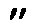 trockene" Entlüftung des Innenraums eines umlaufenden Getriebegehäuses für ein Schaltgetriebe für Nebenaggregate gewährleistet. Es wird ein Kanalsystem vorgeschlagen, welches in einem Entlüftungsdeckel untergebracht ist und eine zentrale Entlüftungsbohrung aufweist, wobei diese Entlüftungsbohrung über Labyrinthgänge mit den Inneren des Getriebegehäuses verbunden ist, wobei diese Labyrinthgänge bei allen möglichen Lagen des Getriebegehäuses wenigstens teilweise über den Pegel des Schmiermittels im Getriebegehäuse hinausragen, bevor die Entlüftungsbohrung mit dem Inneren des Getriebegehäuses zusammengeschaltet wird. Da Getriebegehäuse von Schaltgetrieben für Nebenaggregate üblicherweise eine Dauerbefüllung mit Schmiermittel aufweisen, muß gewährleistet sein, daß es keine Schmiermittelverluste gibt.

Es ist daher die Aufgabe der Erfindung, eine Entlüftung für ein umlaufendes Getriebegehäuse eines Getriebes für Nebenaggregate an Antriebsmotoren für Kraftfahrzeuge zu schaffen, die bei allen Lagen des Fahrzeuges wie auch bei allen Temperaturverhältnissen funktioniert, ohne auch nur den geringsten Anteil des Schmiermittels nach außerhalb zu befördern.

Die Lösung der Aufgabe wird in den Ansprüchen beschrieben.

Ein Ausführungsbeispiel für eine Entlüftung eines umlaufenden Getriebegehäuses eines Schaltgetriebes für Nebenaggregate an Antriebsmotoren für Kraftfahrzeuge wird anhand von Zeichnungen beschrieben. Es zeigen:
- Fig. 1: einen Entlüftungsdeckel bestehend aus einem Labyrinthträger und einem Deckel entlang der Mittelachse geschnitten;
- Fig. 2: den Entlüftungsdeckel mit einer Entlüftungsbohrung im Zentrum und mit Luftausgleichsbohrungen im Schnitt quer zur Achse;
- Fig. 3: den Entlüftungsdeckel an einem Getriebegehäuse in geneigter Lage im Schnitt.

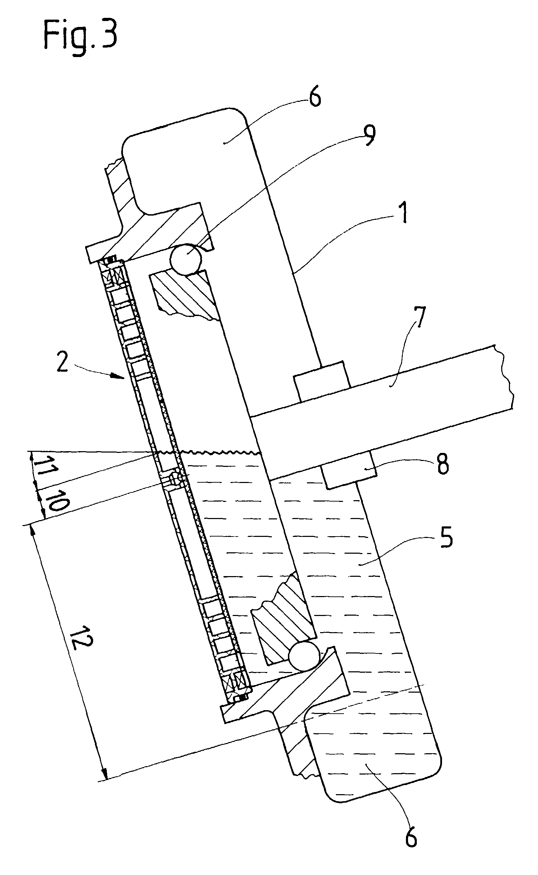

Wird mit 1 ein umlaufendes Getriebegehäuse eines Schaltgetriebes für Nebenaggregate an Antriebsmotoren für Kraftfahrzeuge bezeichnet, so wird dieses auf der dem Antriebsmotor abgewandten Seite mit einem Entlüftungsdeckel 2 abgedichtet. Dieser Entlüftungsdeckel 2 besteht aus einem Labyrinthträger 3, der mit einem Deckel 4 verbunden ist und ein mit Hohlräumen ausgestattetes kreisrundes Teil bildet. Gemäß Fig. 3 ist das Getriebegehäuse 1 um eine Antriebswelle 7 über einen Mitnehmer 8 und ein Lager 9 angeordnet, wobei das Getriebegehäuse 1 mit einem Schrägstandswinkel 11, der in der Praxis durch Parken des Fahrzeuges an exponierter Stelle im Gelände vorkommen kann, gezeichnet. Ein Schmiermittel 5 bildet einen Pegel 10 aus, der bei Stillstand des Antriebsmotors über die Mitte des Entlüftungsdeckels hinaus ansteigen kann. Wird das Getriebegehäuse 1 über die Antriebswelle 7 vom Antriebsmotor über den Mitnehmer 8 in Rotation versetzt, so wird das Schmiermittel 5 durch die auftretende Fliehkraft im Getriebegehäuse nach radial außen geschleudert und bildet sich in einem Ringraum 6 derart aus, daß ein innerer Begrenzungsradius 12 des Schmiermittels 5 entsteht, wobei die radial innerhalb liegenden Elemente des Schaltgetriebes nicht mehr von Schmiermittel 5, auch bei extremen Schrägstandswinkel 11, benetzt werden können.

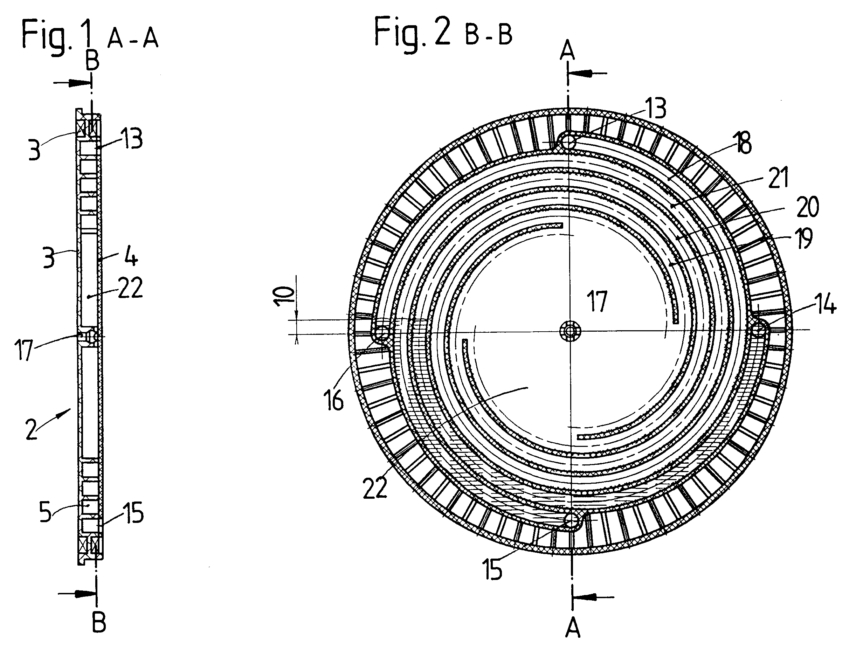

Gemäß Fig. 2 liegt der Erfindungsgegenstand darin, daß die Außenatmosphäre mit dem Ringraum 6 über eine zentral in der Verlängerung der Drehachse der Antriebswelle 7 angeordnete Entlüftungsbohrung 17, über einen Zentralraum 22, über spiralenförmig verlaufende Labyrinthgänge 18,19,20,21 und über daran angeschlossene Luftausgleichsbohrungen 13,14,15,16 verbunden ist. So ist die erste Luftausgleichsbohrung 13 über den ersten Labyrinthgang 19 mit dem Zentralraum 22 verbunden, der wiederum über die Entlüftungsbohrung 17 mit der Atmosphäre in Verbindung steht. In gleicher Weise ist die zweite Luftausgleichsbohrung 14 über den zweiten Labyrinthgang 19 ebenfalls mit dem Zentralraum 22 verbunden wie auch die dritte Luftausgleichsbohrung und die vierte Luftausgleichsbohrung jeweils über einen dritten Labyrinthgang 20 und einem vierten Labyrinthgang 21 mit dem Zentralraum 22 verbunden sind. Die Labyrinthgänge 18,19,20,21 beschreiben jeweils ausgehend von deren Luftausgleichsbohrungen 13,14,15,16 eine nach radial innen sich fortsetzende Spirale, die jeweils etwa eine volle Umrundung der als Zentrum festgelegten Entlüftungsbohrung 17 beschreibt. Durch die symmetrische Anlage aller Labyrinthgänge 18,19,20,21 entsteht eine nach innen sich fortsetzende zusammengesetzte mehrgängige Spirale. Unter der Annahme eines Schrägstandswinkels 11 gemäß Fig. 3 ergibt sich ein Pegel 10, der - wie aus Fig. 2 zu entnehmen ist - die zweite Luftausgleichsbohrung 14, die dritte Luftausgleichsbohrung 15 sowie die vierte Luftausgleichsbohrung 16 abdeckt und daher den zweiten Labyrinthgang 19 etwa zur Hälfte, den dritten Labyrinthgang 20 zu einem Viertel und den vierten Labyrinthgang 21 kurz über die vierte Luftausgleichsbohrung 16 füllt. Als einzige bleibt die erste Luftausgleichsbohrung 13 von Schmiermittel verschont, weshalb der erste Labyrinthgang 18 ebenfalls von Schmiermittel 5 freibleibt mit der Konsequenz, daß die Atmosphäre über die Entlüftungsbohrung 17, den Zentralraum 22, den ersten Labyrinthgang 18 und die erste Luftausgleichsbohrung 33 mit dem Ringraum 6 des Getriebegehäuses 1 in Berührung steht. Es ist somit nicht möglich, daß bei nicht rotierendem Getriebegehäuse 1 Schmiermittel 5 vom Ringraum 6 nach außen an die Atmosphäre dringen kann, wenn im Inneren des Getriebegehäuses 1 Überdruck herrscht.

Da bei rotierendem Schaltgetriebe das Schmiermittel 5, wie schon erwähnt, sich außerhalb eines inneren Begrenzungsradius 12 im Getriebegehäuse 1 befindet, ist lediglich sicherzustellen, daß in der Drehbeschleunigungsphase beim Anlaufen des Schaltgetriebes kein Schmiermittel 5 von den außenliegenden Luftausgleichsbohrungen 13,14,15,16 nach radial innen zum Zentralraum 22 gelangt. Aus diesem Grunde kann die Anordnung der mehrgängigen Spirale nur in einer Drehrichtung A angeordnet sein, daß sich das Schmiermittel 5 der Massenträgheit folgend durch die Luftausgleichsbohrungen 14,15,16 in das Getriebegehäuse 1 zurückzieht. Wird also der Entlüftungsdeckel 2 in der Drehrichtung A gemäß Fig. 2 beschleunigt, so fließt das Schmiermittel 5 im zweiten Labyrinthgang 19 durch die zweite Luftausgleichsbohrung 14 in das Getriebegehäuse 1 zurück. Ebenso fließt das Schmiermittel 5 durch den dritten Labyrinthgang 20 und den vierten Labyrinthgang 21 und somit durch die dritte und die vierte Luftausgleichsbohrung 15 und 16 in das Getriebegehäuse 1 zurück.

Von Vorteil ist die platzsparende Anordnung des mehrgängigen Labyrinths der Labyrinthgänge 18,19,20,21 im Entlüftungsdeckel 2 mit einer zuverlässigen Funktion im Bezug auf die Aufgabenstellung.

## Patentansprüche

1. Entlüftungsdeckel (2) zur Abdichtung eines drehbaren Getriebegehäuses (1) eines Schaltgetriebes für Nebenaggregate an Antriebsmotoren für Kraftfahrzeuge mit einem in das Getriebegehäuse (1) eingeschlossenen Schmiermittel (5), welches bei Rotation des Getriebegehäuses (1) um das Zentrum einer Antriebswelle (7) in einem Ringraum (6) einen darin radial außen anliegenden Schmiermittelring mit einem inneren Begrenzungsradius (12) bildet, und bei Stillstand des Getriebegehäuses (1) das Innere desselben etwa zur Hälfte füllt, wobei das Getriebegehäuse (1) eine Entlüftungsbohrung (17) aufweist,
dadurch gekennzeichnet,
daß der Entlüftungsdeckel (2) aus einem Labyrinthträger (3) und einem Deckel (4) besteht, wobei die Außenatmosphäre mit dem Ringraum (6) über die im Labyrinthträger (3) zentral in der Verlängerung der Drehachse der Antriebswelle (7) angeordnete Entlüftungsbohrung (17) über einen Zentralraum (22), über spiralenförmig verlaufende Labyrinthgänge (18 - 21) und über daran angeschlossene Luftausgleichsbohrungen (13-16) verbunden ist.

2. Entlüftungsdeckel nach Anspruch 1,
dadurch gekennzeichnet,
daß mindestens drei an die Labyrinthgänge (18-21) angeschlossene Luftausgleichsbohrungen (13-16) auf einem Durchmesser mit der Entlüftungsbohrung (17) als Zentrum und mit gleichem Abstand voneinander verteilt angeordnetsind.

3. Entlüftungsdeckel nach einem der Ansprüche 1 oder 2,
dadurch gekennzeichnet,
daß die Labyrinthgänge (18-21) in der Ebene des Entlüftungsdeckels (2) spiralenförmig nach radial innen verlaufend angeordnet sind.

4. Entlüftungsdeckel nach einem der Ansprüche 1 bis 3,
dadurch gekennzeichnet,
daß der erste Labyrinthgang (18) ausgehend von der ersten Luftausgleichsbohrung (13) eine nach radial innen gerichtet Spirale von etwa einer vollen Umrundung der als Zentrum festgelegten Entlüftungsbohrung (17) beschreibt.

5. Entlüftungsdeckel nach einem der Ansprüche 1 bis 4,
dadurch gekennzeichnet,
daß die anderen in jeweils gleichem Abstand voneinander liegenden zweiten, dritten und vierten Luftausgleichsbohrungen (14,15,16) jeweils mit einem zweiten, dritten und vierten Labyrinthgang (19,20,21) verbunden sind, wobei sich der zweite Labyrinthgang (19) außen an den ersten Labyrinthgang (18), der dritte Labyrinthgang (20) außen an den zweiten Labyrinthgang (19) und der vierte Labyrinthgang (21) außen an den dritten Labyrinthgang (20) anschließt, wodurch eine für diesen Fall viergängige Spirale entsteht.

6. Entlüftungsdeckel nach einem der Ansprüche 1 bis 5,
dadurch gekennzeichnet,
daß die viergängige Spirale in einer Antriebsrichtung (A) gesehen nach radial innen verläuft.
